# EUROPÄISCHE PATENTANMELDUNG

(11) **EP 4 699 825 A1**
(43) Veröffentlichungstag der Anmeldung: **25.02.2026**
(21) Anmeldenummer: 24195124.3
(22) Anmeldetag: 19.08.2024
(51) Int. Cl.: B60C 23/06

(54) **VERFAHREN ZUR ERMITTLUNG EINES DRUCKVERLUSTS IN EINEM REIFEN**

(71) Anmelder: Deere & Company, Moline, IL 61265 (US)
(72) Erfinder: KANICHE, ONKAR, 68163 Mannheim (DE); GOKHALE, SOURABHA, 68163 Mannheim (DE); SCHOTT, FLORIAN, 68163 Mannheim (DE)
(74) Vertreter: Dehnhardt, Florian Christopher

(57) **Zusammenfassung**

Bei einem Verfahren zur Ermittlung eines Druckverlusts in einem Reifen (50, 52) eines vierrädrigen Fahrzeugs (12) ist vorgesehen, dass erste und zweite Beschleunigungsmesseinrichtungen (14, 16) an einer starren Fahrzeugstruktur (22) in Fahrzeuglängs- und Fahrzeugquerrichtung (24, 26) zueinander beabstandet angebracht sind, wobei mittels der Beschleunigungsmesseinrichtungen (14, 16) eine erste bzw. zweite Neigungsgröße ermittelt wird, die eine Längs- und/oder Querneigung der Fahrzeugstruktur (22) gegenüber einer vorgegebenen Horizontalebene (38) in einem der jeweiligen Beschleunigungsmesseinrichtung (14, 16) zugeordneten ersten bzw. zweiten Bezugspunkt (40, 42) charakterisiert, wobei auf untergrundbedingte Änderungen der Längs- und/oder Querneigung zurückgehende Anteile der ersten bzw. zweiten Neigungsgröße während der Fahrt des Fahrzeugs (12) von einer Auswerteeinheit (20) auf Grundlage einer sich aus der Fahrtgeschwindigkeit des Fahrzeugs (12) sowie einem fahrtrichtungsbezogenen Abstand der beiden Bezugspunkte (40, 42) ergebenden Koinzidenz eliminiert werden, um ausgehend von einem verbleibenden invarianten Anteil der ersten bzw. zweiten Neigungsgröße auf einen Druckverlust in einem der Reifen (50, 52) zu schließen.

## Beschreibung

Im Automobilbereich übliche Verfahren zur Ermittlung eines in einem Reifen auftretenden Druckverlusts beruhen meist auf einer direkten Messung des Reifeninnendrucks, wozu jedem der Fahrzeugräder ein individueller Druck- und Temperatursensor zugeordnet ist. Die solchermaßen erfassten Druck- und Temperaturinformationen werden telemetrisch an eine im Fahrzeug untergebrachte Kontrolleinheit übertragen, die bei Erkennung eines unzulässigen Reifeninnendrucks die Ausgabe eines entsprechenden Fahrerhinweises über eine Nutzerschnittstelle veranlasst. Der in einer Sensoreinheit gemeinsam mit einem Funktransponder zusammengefasste Druck- und Temperatursensor befindet sich üblicherweise auf einer Felgen- oder Reifeninnenseite im Bereich eines Reifenventils und wird zusammen mit diesem montiert. Da für jedes der Fahrzeugräder eine eigene Sensoreinheit vorzusehen ist, ist der Aufbau derartiger Reifendruckkontrollsysteme nicht nur verhältnismäßig aufwändig, auch benötigt jede der Sensoreinheiten eine eigene Stromversorgung in Gestalt einer eingebauten Batterie. Die Lebenserwartung der Batterie liegt in der Größenordnung einiger Jahre. Muss diese ausgetauscht werden, so ist zunächst eine Demontage des Reifens von der Felge erforderlich, um auf die betreffende Sensoreinheit zugreifen zu können.

Daneben sind Verfahren zur indirekten Messung des Reifeninnendrucks bekannt. Diese beruhen zum Beispiel auf einer komplexen Analyse des Abroll- oder Schwingungsverhaltens des Reifenmantels. Angesichts dessen ist es Aufgabe der vorliegenden Erfindung, ein Verfahren der eingangs genannten Art anzugeben, das die Erkennung eines unerwünschten Reifendruckverlusts an einem vierrädrigen Fahrzeug mit vergleichsweise geringem Aufwand erlaubt.

Diese Aufgabe wird durch ein Verfahren zur Ermittlung eines Druckverlusts in einem Reifen eines vierrädrigen Fahrzeugs mit den Merkmalen des Patentanspruchs 1 gelöst.

Bei dem Verfahren zur Ermittlung eines Druckverlusts in einem Reifen eines vierrädrigen Fahrzeugs ist vorgesehen, dass erste und zweite Beschleunigungsmesseinrichtungen an einer starren Fahrzeugstruktur in Fahrzeuglängs- und Fahrzeugquerrichtung zueinander beabstandet angebracht sind, wobei mittels der Beschleunigungsmesseinrichtungen eine erste bzw. zweite Neigungsgröße ermittelt wird, die eine Längs- und/oder Querneigung der Fahrzeugstruktur gegenüber einer vorgegebenen Horizontalebene in einem der jeweiligen Beschleunigungsmesseinrichtung zugeordneten ersten bzw. zweiten Bezugspunkt charakterisiert, wobei auf untergrundbedingte Änderungen der Längs- und/oder Querneigung zurückgehende Anteile der ersten bzw. zweiten Neigungsgröße während der Fahrt des Fahrzeugs von einer Auswerteeinheit auf Grundlage einer sich aus der Fahrtgeschwindigkeit des Fahrzeugs sowie einem fahrtrichtungsbezogenen Abstand der beiden Bezugspunkte ergebenden Koinzidenz eliminiert werden, um ausgehend von einem verbleibenden invarianten Anteil der ersten bzw. zweiten Neigungsgröße auf einen Druckverlust in einem der Reifen zu schließen.

Das Verfahren macht sich die Erkenntnis zunutze, dass sich ein vierrädriges Fahrzeug im Falle eines an einem der Reifen auftretenden Druckverlusts diagonal in Richtung des betreffenden Reifens neigt. Diese Diagonalneigung bleibt während der Fahrt des Fahrzeugs weitgehend unverändert und führt zum Auftreten eines entsprechenden Offsets der ersten bzw. zweiten Neigungsgröße. Verbleibt nach dem Herausfiltern der untergrundbedingten Anteile daher solch ein Offset, so kann verlässlich auf das Vorliegen eines zu geringen Reifeninnendrucks in einem der Reifen geschlossen werden. Dies erlaubt zumindest eine qualitative Bewertung des Reifeninnendrucks, was für die meisten Anwendungen (beispielsweise zur Ausgabe einer Reifendruckwarnung) vollkommen ausreichend ist.

Inwieweit die ermittelte erste bzw. zweite Neigungsgröße anteilig auf eine untergrundbedingte Änderung der Längs- und/oder Querneigung zurückgeht, kann aufgrund des charakteristischen Umstands ermittelt werden, dass die Änderung an beiden Beschleunigungsmesseinrichtungen in mit der Fahrtgeschwindigkeit des Fahrzeugs sowie dem fahrtrichtungsbezogenen Abstand der beiden Bezugspunkte korrespondierendem zeitlichen Abstand nacheinander auftritt. Der zeitliche Verlauf der von den beiden Beschleunigungsmesseinrichtungen jeweils ermittelten Neigungsgrößen stimmt dann im Wesentlichen bis auf eine mit dem zeitlichen Abstand korrespondierende Phasenverschiebung überein. Wird die Differenz der beiden Verläufe unter Berücksichtigung dieser Phasenverschiebung gebildet, so verbleibt lediglich ein gegebenenfalls vorhandener zeitlich invarianter Anteil der ersten bzw. zweiten Neigungsgröße.

Die Beschleunigungsmesseinrichtungen sind gerade in größeren Stückzahlen vergleichsweise kostengünstig erhältlich. Auch sind diese in manchen Steuergeräten zur Bewertung des fahrdynamischen Verhaltens hinsichtlich fahrtbedingt auftretender Nick-, Wank- und Gierbewegungen des Fahrzeugs ohnedies vorhanden, sodass sich eine Mitnutzung zwanglos anbietet. Ungeachtet dessen ist jedoch auch eine Nachrüstung ohne nennenswerten technischen Aufwand möglich. Die von den Beschleunigungsmesseinrichtungen bereitgestellten Neigungsinformationen können hierbei über einen CAN-Datenbus an die Auswerteeinheit zur weiteren Verarbeitung übermittelt werden.

Vorteilhafte Ausgestaltungen des erfindungsgemäßen Verfahrens gehen aus den Unteransprüchen hervor.

Vorzugsweise wird die Ermittlung des Druckverlusts von der Auswerteeinheit unter dem Vorbehalt einer vorab erkannten Änderung der Längs- und/oder Querneigung der Fahrzeugstruktur durchgeführt. Somit wird zunächst überprüft, ob überhaupt eine Neigungsänderung an der Fahrzeugstruktur auftritt. Ist dies nicht der Fall, so führt eine weitergehende Auswertung der ermittelten Neigungsgrößen zu keinem verwertbaren Ergebnis und kann von vornherein unterbleiben. Eine ineffiziente Beaufschlagung der (mikroprozessorgesteuerten) Auswerteeinheit mit der Durchführung unnötiger Rechenoperationen kann so vermieden werden.

Auch besteht die Möglichkeit, dass von der Auswerteeinheit ausgehend von dem ermittelten invarianten Anteil der ersten bzw. zweiten Neigungsgröße sowie einer sich insofern in Richtung des betroffenen Reifens ergebenden Diagonalneigung der Fahrzeugstruktur nicht nur auf das Vorliegen eines unerwünschten Reifendruckverlusts, sondern gleichfalls auf eine Lage des vom Druckverlust betroffenen Reifens am Fahrzeug geschlossen wird.

In diesem Zusammenhang ist es vorstellbar, dass auf Veranlassung der Auswerteeinheit im Falle eines erkannten Druckverlusts über eine Datenschnittstelle eine auf den Druckverlust sowie die Lage des betroffenen Reifens hinweisende Information ausgegeben wird.

Die Ausgabe der Information kann hierbei als Reifendruckwarnung über ein Fahrzeugdisplay und/oder durch drahtlose Übermittlung an einen zentralen Datenserver erfolgen, auf den beispielsweise ein Wartungsdienst Zugriff hat, der davon ausgehend einen passenden Ersatzreifen im Rahmen eines mobilen Serviceeinsatzes bereitstellen kann. Eine derartige Ferndiagnose ist gerade auch bei vollautonomen Fahrzeugen hilfreich, da hier kein Bediener vor Ort ist, der die entsprechenden Informationen zur Verfügung stellen könnte.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein als Blockdiagramm veranschaulichtes Ausführungsbeispiel des erfindungsgemäßen Verfahrens zur Ermittlung eines Druckverlusts in einem Reifen eines vierrädrigen Fahrzeugs,
- Fig. 2: ein schematisch dargestelltes Ausführungsbeispiel eines in einem landwirtschaftlichen Traktor vorgesehenen Reifendruckkontrollsystems, in dem die verfahrensgemäße Funktion verwirklicht ist,

- Fig. 3: eine beispielhaft dargestellte Fahrsituation des landwirtschaftlichen Traktors beim Befahren eines unebenen bzw. hügeligen Terrains,
- Fig. 4: ein mittels einer ersten Beschleunigungsmesseinrichtung erfasstes Neigungsprofil beim Befahren des in Fig. 3 gezeigten Terrains, und
- Fig. 5: ein mittels einer zweiten Beschleunigungsmesseinrichtung erfasstes Neigungsprofil beim Befahren des in Fig. 3 gezeigten Terrains.

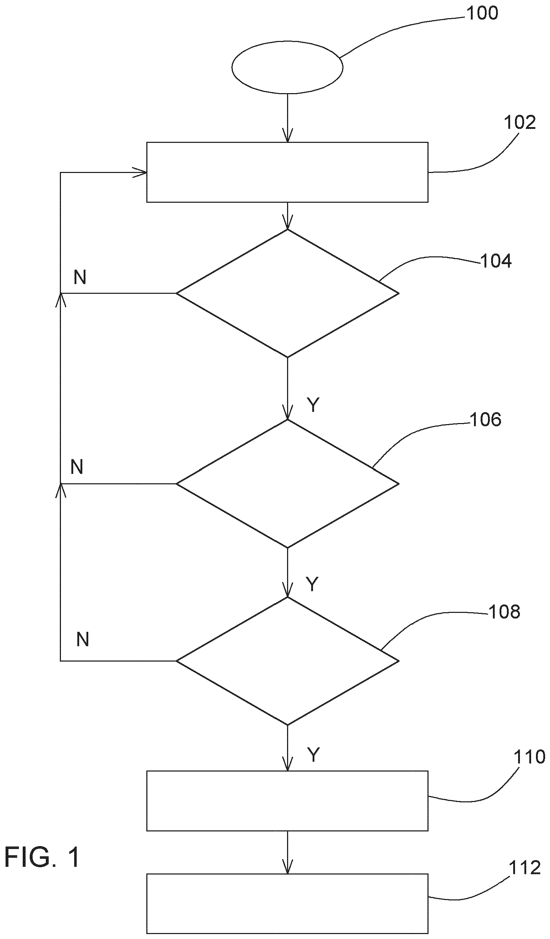

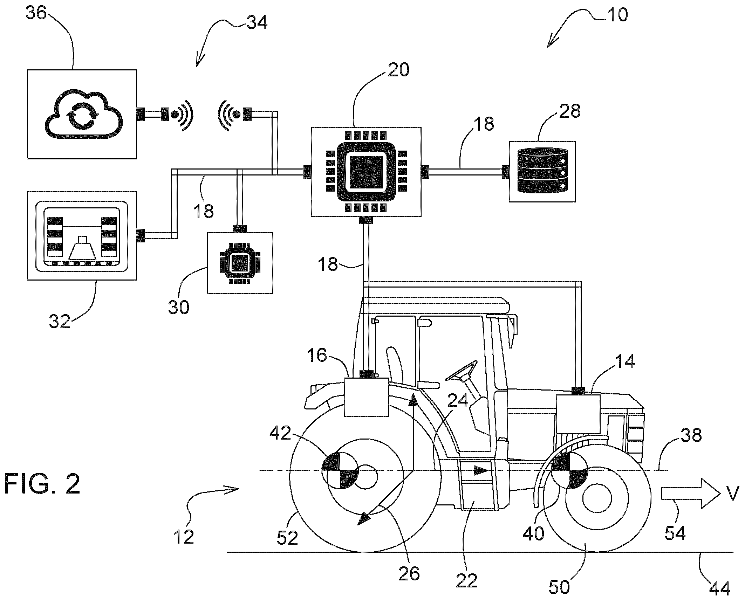

Fig. 1 zeigt ein als Blockdiagramm dargestelltes Ausführungsbeispiel des erfindungsgemäßen Verfahrens zur Ermittlung eines Druckverlusts in einem Reifen eines vierrädrigen Fahrzeugs, dessen Funktion in dem in Fig. 2 wiedergegebenen Reifendruckkontrollsystem verwirklicht ist.

Zum besseren Verständnis soll zunächst auf den Aufbau des Reifendruckkontrollsystems 10 eingegangen werden. Das in einem landwirtschaftlichen Traktor 12 untergebrachte Reifendruckkontrollsystem 10 umfasst erste und zweite Beschleunigungsmesseinrichtungen 14, 16 zur Bereitstellung von Neigungsinformationen, die über einen CAN-Datenbus 18 an eine mikroprozessorgesteuerte Auswerteeinheit 20 zur weiteren Verarbeitung übermittelt werden. Wie in Fig. 2 angedeutet ist, sind die beiden Beschleunigungsmesseinrichtungen 14, 16 an einer starren Fahrzeugstruktur 22 des landwirtschaftlichen Traktors 12 in Fahrzeuglängs- und Fahrzeugquerrichtung 24, 26 zueinander beabstandet angebracht. Des Weiteren kommuniziert die Auswerteeinheit 20 über den CAN-Datenbus 18 mit einer Speichereinheit 28 sowie einer Datenschnittstelle 30, die der Ansteuerung eines Fahrzeugdisplays 32 sowie der Herstellung einer drahtlosen Datenübertragungsverbindung 34 mit einem externen Datenserver 36 dient.

Gemäß Fig. 1 wird das von der Auswerteeinheit 20 durchgeführte und in der Speichereinheit 28 als entsprechender Programmcode abgelegte Verfahren in einem ersten Schritt 100 mit Inbetriebnahme des landwirtschaftlichen Traktors 12 gestartet, woraufhin in einem zweiten Schritt 102 von der Auswerteeinheit 20 auf Grundlage der über den CAN-Datenbus 18 bereitgestellten Neigungsinformationen eine erste bzw. zweite Neigungsgröße ermittelt wird, die eine Längs- und/oder Querneigung der Fahrzeugstruktur 22 gegenüber einer vorgegebenen Horizontalebene 38 in einem der jeweiligen Beschleunigungsmesseinrichtung 14, 16 zugeordneten ersten bzw. zweiten Bezugspunkt 40, 42 charakterisiert. Unter einer Längsneigung der Fahrzeugstruktur 22 ist vorliegend eine Drehung um eine mit der Fahrzeugquerrichtung 26 zusammenfallende Drehachse, unter einer Querneigung eine Drehung um eine mit der Fahrzeuglängsrichtung 26 zusammenfallende Drehachse zu verstehen.

Die Zuordnung der beiden Bezugspunkte 40, 42 zu den Beschleunigungsmesseinrichtungen 14, 16 erfolgt derart, dass diese bei auf ebenem Untergrund 44 stehendem landwirtschaftlichen Traktor 12 in der vorgegebenen Horizontalebene 38 liegen (siehe Fig. 2).

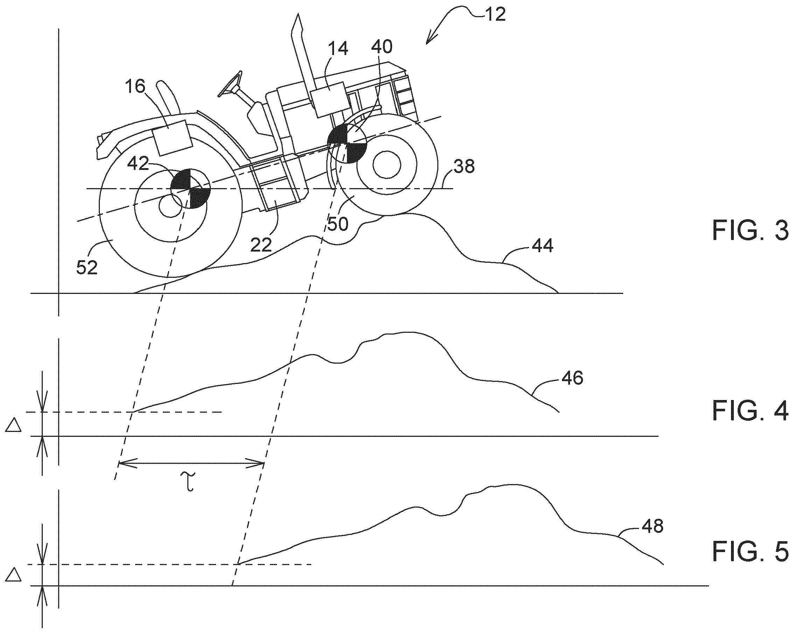

Die ermittelte erste bzw. zweite Neigungsgröße wird anschließend in einem dritten Schritt 104 hinsichtlich einer gegenüber dem Untergrund 44 auftretenden Änderung der Längs- und/oder Querneigung der Fahrzeugstruktur 22 überprüft. Ist eine solche Änderung aus wenigstens einer der beiden Neigungsgrößen ableitbar, wie im Falle der in Fig. 3 beispielhaft dargestellten Fahrsituation des landwirtschaftlichen Traktors 12 beim Befahren eines unebenen bzw. hügeligen Terrains, so wird mit einem vierten Schritt 106 fortgefahren. Andernfalls kehrt das Verfahren zum zweiten Schritt 102 zurück. Mit anderen Worten steht die Fortführung des Verfahrens mit dem vierten Schritt 106 unter dem Vorbehalt einer im dritten Schritt 104 vorab erkannten Änderung der Längs- und/oder Querneigung der Fahrzeugstruktur 22.

Mittels jeder der beiden Beschleunigungsmesseinrichtungen 14, 16 wird letztlich ein den Verlauf des befahrenen Untergrunds 44 charakterisierendes Neigungsprofil 46, 48 erfasst. Dieses ist in Fig. 4 bzw. 5 beispielhaft veranschaulicht.

Im vierten Schritt 106 werden von der Auswerteeinheit 20 auf untergrundbedingte Änderungen der Längs- und/oder Querneigung zurückgehende Anteile der ersten bzw. zweiten Neigungsgröße während der Fahrt des landwirtschaftlichen Traktors 12 identifiziert und anschließend eliminiert. Letzteres erfolgt auf Grundlage einer sich aus der Fahrtgeschwindigkeit v des landwirtschaftlichen Traktors 12 sowie einem fahrtrichtungsbezogenen Abstand der beiden Bezugspunkte 40, 42 ergebenden Koinzidenz. Stellt die Auswerteeinheit 20 in einem fünften Schritt 108 einen verbleibenden invarianten Anteil der ersten bzw. zweiten Neigungsgröße fest, so schließt diese in einem sechsten Schritt 110 auf das Vorliegen eines Druckverlusts in einem der Reifen 50, 52 des landwirtschaftlichen Traktors 12. Vorliegend sind lediglich die rechten Reifen 50, 52 zu sehen, die linken sind in der gewählten Ansicht verdeckt. Die Fahrtgeschwindigkeit v des landwirtschaftlichen Traktors 12 wird hierbei von der Auswerteeinheit 20 aus Raddrehzahlinformationen, die am CAN-Datenbus 18 anliegen, ermittelt.

Optional ist im sechsten Schritt 110 vorgesehen, dass von der Auswerteeinheit 20 ausgehend von dem ermittelten invarianten Anteil der ersten bzw. zweiten Neigungsgröße sowie einer sich insofern in Richtung des betroffenen Reifens 50 ergebenden Diagonalneigung der Fahrzeugstruktur 22 nicht nur auf das Vorliegen eines unerwünschten Reifendruckverlusts, sondern gleichfalls auf eine Lage des vom Druckverlust betroffenen Reifens 50 am landwirtschaftlichen Traktor 12 geschlossen wird. Beispielsgemäß handelt es sich um den rechten vorderen Reifen 50 des landwirtschaftlichen Traktors 12.

Sind derartige Anteile der ersten bzw. zweiten Neigungsgröße im vierten Schritt 106 bzw. fünften Schritt 108 nicht ableitbar, so kehrt das Verfahren jeweils wieder zum zweiten Schritt 102 zurück.

Allgemein gesprochen macht sich das Verfahren die Erkenntnis zunutze, dass sich der vierrädrige landwirtschaftliche Traktor 12 (wie jedes mit Luftreifen ausgestattete vierrädrige Fahrzeug) im Falle eines an einem der Reifen 50, 52 auftretenden Druckverlusts diagonal in Richtung des betreffenden Reifens 50, 52 neigt. Diese sich aus der Überlagerung einer Längs- und Querneigung der Fahrzeugstruktur 22 ergebende Diagonalneigung bleibt während der Fahrt des landwirtschaftlichen Traktors 12 weitgehend unverändert und führt zum Auftreten eines entsprechenden Offsets Δ der ersten bzw. zweiten Neigungsgröße. Verbleibt nach dem Herausfiltern der untergrundbedingten Anteile daher solch ein Offset Δ, so kann verlässlich auf das Vorliegen eines zu geringen Reifeninnendrucks in einem der Reifen 50, 52 geschlossen werden.

Inwieweit die ermittelte erste bzw. zweite Neigungsgröße anteilig auf eine untergrundbedingte Änderung der Längs- und/oder Querneigung zurückgeht, wird von der Auswerteeinheit 20 aufgrund des charakteristischen Umstands ermittelt, dass die Änderung an beiden Beschleunigungsmesseinrichtungen 14, 16 in mit der Fahrtgeschwindigkeit v des landwirtschaftlichen Traktors 12 sowie dem fahrtrichtungsbezogenen Abstand der beiden Bezugspunkte 40, 42 korrespondierendem zeitlichen Abstand τ nacheinander auftritt. Der zeitliche Verlauf der von den beiden Beschleunigungsmesseinrichtungen 14, 16 jeweils ermittelten Neigungsgrößen stimmt dann im Wesentlichen bis auf eine mit dem zeitlichen Abstand τ korrespondierende Phasenverschiebung überein. Wird die Differenz der beiden Verläufe unter Berücksichtigung dieser Phasenverschiebung gebildet, so verbleibt lediglich ein gegebenenfalls vorhandener zeitlich invarianter Anteil in Gestalt eines entsprechenden Offsets Δ der ersten bzw. zweiten Neigungsgröße.

Dieses Verhalten ist in Fig. 3 in Verbindung mit Fig. 4 und 5 beispielhaft veranschaulicht. Wenn sich der landwirtschaftliche Traktor 12 auf unebenem bzw. hügeligem Terrain bewegt, so wird eine in Fahrtrichtung 54 liegende Änderung der Neigung zunächst von der ersten Beschleunigungsmesseinrichtung 14 (siehe Fig. 4) und erst danach in sich aus der Fahrtgeschwindigkeit v des landwirtschaftlichen Traktors 12 sowie dem fahrtrichtungsbezogenen Abstand der beiden Bezugspunkte 40, 42 ergebenden zeitlichen Abstand τ von der zweiten Beschleunigungsmesseinrichtung 16 (siehe Fig. 5) erfasst. Auf diese Weise lässt sich eine dauerhafte Neigung aufgrund eines Reifendruckverlusts von untergrundbedingt während der Fahrt auftretenden Neigungsänderungen zuverlässig unterscheiden.

In einem siebten Schritt 112 ist ferner vorgesehen, dass auf Veranlassung der Auswerteeinheit 20 im Falle eines im sechsten Schritt 110 erkannten Druckverlusts über die Datenschnittstelle 30 eine auf den Druckverlust sowie die Lage des betroffenen Reifens 50 hinweisende Information ausgegeben wird. Die Ausgabe der Information erfolgt hierbei als Reifendruckwarnung über das Fahrzeugdisplay 32 und/oder durch drahtlose Übermittlung an den zentralen Datenserver 36, auf den beispielsweise ein Wartungsdienst Zugriff hat, der davon ausgehend einen passenden Ersatzreifen im Rahmen eines mobilen Serviceeinsatzes bereitstellen kann.

Der Vollständigkeit halber sei angemerkt, dass es sich bei dem Fahrzeug nicht zwingend um einen landwirtschaftlichen Traktor 12 handeln muss, vielmehr kann das erfindungsgemäße Verfahren auch bei vierrädrigen Fahrzeugen beliebiger anderer Bauart Einsatz finden.

## Patentansprüche

1. Verfahren zur Ermittlung eines Druckverlusts in einem Reifen eines vierrädrigen Fahrzeugs, bei dem erste und zweite Beschleunigungsmesseinrichtungen (14, 16) an einer starren Fahrzeugstruktur (22) in Fahrzeuglängs- und Fahrzeugquerrichtung (24, 26) zueinander beabstandet angebracht sind, wobei mittels der Beschleunigungsmesseinrichtungen (14, 16) eine erste bzw. zweite Neigungsgröße ermittelt wird, die eine Längs- und/oder Querneigung der Fahrzeugstruktur (22) gegenüber einer vorgegebenen Horizontalebene (38) in einem der jeweiligen Beschleunigungsmesseinrichtung (14, 16) zugeordneten ersten bzw. zweiten Bezugspunkt (40, 42) charakterisiert, wobei auf untergrundbedingte Änderungen der Längs- und/oder Querneigung zurückgehende Anteile der ersten bzw. zweiten Neigungsgröße während der Fahrt des Fahrzeugs (12) von einer Auswerteeinheit (20) auf Grundlage einer sich aus der Fahrtgeschwindigkeit des Fahrzeugs (12) sowie einem fahrtrichtungsbezogenen Abstand der beiden Bezugspunkte (40, 42) ergebenden Koinzidenz eliminiert werden, um ausgehend von einem verbleibenden invarianten Anteil der ersten bzw. zweiten Neigungsgröße auf einen Druckverlust in einem der Reifen (50, 52) zu schließen.

2. Verfahren nach Anspruch 1, **dadurch gekennzeichnet, dass** die Ermittlung des Druckverlusts von der Auswerteeinheit (20) unter dem Vorbehalt einer vorab erkannten Änderung der Längs- und/oder Querneigung der Fahrzeugstruktur (22) durchgeführt wird.

3. Verfahren nach Anspruch 1 oder 2, **dadurch gekennzeichnet, dass** von der Auswerteeinheit (20) ausgehend von dem ermittelten invarianten Anteil der ersten bzw. zweiten Neigungsgröße sowie der sich insofern in Richtung des betroffenen Reifens (50) ergebenden Diagonalneigung der Fahrzeugstruktur (22) auf eine Lage des vom Druckverlust betroffenen Reifens (50) am Fahrzeug (12) geschlossen wird.

4. Verfahren nach Anspruch 3, **dadurch gekennzeichnet, dass** auf Veranlassung der Auswerteeinheit (20) im Falle eines erkannten Druckverlusts über eine Datenschnittstelle (30) eine auf den Druckverlust sowie die Lage des betroffenen Reifens (50) hinweisende Information ausgegeben wird.

5. Verfahren nach Anspruch 4, **dadurch gekennzeichnet, dass** die Ausgabe der Information als Reifendruckwarnung über ein Fahrzeugdisplay (32) und/oder durch drahtlose Übermittlung an einen zentralen Datenserver (36) erfolgt.
